(19) Europäisches Patentamt
European Patent Office
Office européen des brevets

(11) **EP 2 331 343 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(21) Anmeldenummer: **09777953.2**

(22) Anmeldetag: **19.08.2009**

(51) Int Cl.:
**B42D 15/00** *(2006.01)* **B42D 15/10** *(2006.01)*

(86) Internationale Anmeldenummer:
**PCT/EP2009/005987**

(87) Internationale Veröffentlichungsnummer:
**WO 2010/028739 (18.03.2010 Gazette 2010/11)**

(54) **DARSTELLUNGSANORDNUNG**

REPRESENTATION SYSTEM

DISPOSITIF DE REPRÉSENTATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **10.09.2008 DE 102008046511**

(43) Veröffentlichungstag der Anmeldung:
**15.06.2011 Patentblatt 2011/24**

(73) Patentinhaber: **Giesecke & Devrient GmbH
81677 München (DE)**

(72) Erfinder:
• **KAULE, Wittich
82275 Emmering (DE)**
• **RAHM, Michael
93155 Hemau (DE)**
• **RAUSCHER, Wolfgang
81677 München (DE)**

(56) Entgegenhaltungen:
**WO-A1-94/27254          DE-A1- 19 949 542
DE-A1-102005 052 562     DE-A1-102006 006 501
DE-A1-102006 029 536     DE-A1-102006 029 850
US-A- 5 772 250**

**Beschreibung**

Die Erfindung betrifft eine Darstellungsanordnung für Sicherheitspapiere, Wertdokumente, elektronische Anzeigeeinrichtungen oder andere Datenträger zur Darstellung eines Sollbildes.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, Kreditkarten, Gesundheitskarten sowie Produktsicherungselemente, wie Etiketten, Siegel, Verpackungen und dergleichen. Der Begriff "Datenträger" schließt im Folgenden alle derartigen Gegenstände, Dokumente und Produktsicherungsmittel ein.

Die Sicherheitselemente können beispielsweise in Form eines in eine Banknote eingebetteten Sicherheitsfadens, eines Aufreißfadens für Produktverpackungen, eines aufgebrachten Sicherheitsstreifens, einer Abdeckfolie für eine Banknote mit einer durchgehenden Öffnung oder eines selbsttragenden Transferelements ausgebildet sein, wie etwa einem Patch oder einem Etikett, das nach seiner Herstellung auf ein Wertdokument aufgebracht wird.

Eine besondere Rolle spielen Sicherheitselemente mit optisch variablen Elementen, die dem Betrachter unter unterschiedlichen Betrachtungswinkeln einen unterschiedlichen Bildeindruck vermitteln, da diese selbst mit hochwertigen Farbkopiergeräten nicht reproduziert werden können. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften EP 0 330 733 A1 oder EP 0 064 067 A1 beschrieben sind.

Aus der Druckschrift US 5 712 731 A ist die Verwendung einer Moire-Vergrößerungsanordnung als Sicherheitsmerkmal bekannt. Die dort beschriebene Sicherheitsvorrichtung weist eine regelmäßige Anordnung von im Wesentlichen identischen gedruckten Mikrobildern mit einer Größe bis zu 250 $\mu$m auf sowie eine regelmäßige zweidimensionale Anordnung von im Wesentlichen identischen sphärischen Mikrolinsen. Die Mikrolinsenanordnung weist dabei im Wesentlichen dieselbe Teilung wie die Mikrobildanordnung auf. Wird die Mikrobildanordnung durch die Mikrolinsenanordnung betrachtet, so werden in den Bereichen, in denen die beiden Anordnungen im Wesentlichen im Register stehen, für den Betrachter eine oder mehrere vergrößerte Versionen der Mikrobilder erzeugt.

Die prinzipielle Funktionsweise derartiger Moire-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Kurz gesagt, bezeichnet Moire-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, das in diesem Fall als vergrößertes und gegebenenfalls gedrehtes Bild der wiederholten Elemente des Bildrasters erscheint.

Aus der Druckschrift DE 10 2006 029 850 A1 ist eine Moire-Vergrößerungsanordnung mit einem aus einer Anordnung von Mikromotivelementen bestehenden Motivbild und einer Anordnung von Mikrofokussierelementen bekannt, bei der das Motivbild zwei oder mehr Teilbereiche mit sich in ihrem Kontrast voneinander unterscheidenden Mikromotivelementen enthält. Die Form der Teilbereiche bildet dabei eine durch die Kontrastunterschiede der Mikromotivelemente erkennbare makroskopische Bildinformation.

Davon ausgehend liegt der Erfindung die Aufgabe zugrunde, die Nachteile des Standes der Technik zu vermeiden und insbesondere eine Darstellungsanordnung der eingangs genannten Art mit hoher Fälschungssicherheit anzugeben.

Diese Aufgabe wird durch die Darstellungsanordnung mit den Merkmalen der unabhängigen Ansprüche gelöst. Ein Verfahren zum Herstellen einer solchen Darstellungsanordnung, ein Sicherheitspapier, ein Datenträger sowie eine elektronische Anzeigeanordnung mit solchen Darstellungsanordnungen sind in den nebengeordneten Ansprüchen angegeben. Weiterbildungen der Erfindung sind Gegenstand der Unteransprüche.

Gemäß der Erfindung enthält eine gattungsgemäße Darstellungsanordnung eine Rasterbildanordnung zur Darstellung eines Sollbildes, das in zwei oder mehr Teilsollbilder zerlegt ist, mit

- einem Motivbild, das in eine Mehrzahl von periodisch oder zumindest lokal periodisch angeordneten Zellen eingeteilt ist, in denen jeweils abgebildete Bereiche eines oder mehrerer der Teilsollbilder angeordnet sind,

- einem Betrachtungsraster aus einer Mehrzahl von Betrachtungsrasterelementen zur Betrachtung des Motivbilds mit dem Betrachtungsraster, wobei das Betrachtungsraster bei Betrachtung des Motivbilds das vollständige Sollbild aus den in den Zellen angeordneten abgebildeten Bereichen rekonstruiert,

- wobei das Motivbild unabhängig von der Zelleneinteilung in zumindest erste und zweite Mikroinformationsbereiche aufgeteilt ist, in denen die Zellen jeweils unterschiedliche Kombinationen von abgebildeten Bereichen der Teilsollbilder enthalten, und wobei die Mikroinformationsbereiche in Form vorgegebener Bildmotive angeordnet sind, die informationstragende Bildstrukturen aufweisen, deren Abmessungen unterhalb der Auflösungsgrenze des menschlichen Auges liegen.

Die Erfindung beruht somit auf dem Gedanken, durch eine Aufspaltung des Sollbilds in mehrere Teilsollbilder und eine geeignete Anordnung der den Teilsollbildern zugeordneten Zellen ein Sicherheitsmerkmal höherer Stufe in Form eines vorgegebenen Bildmotivs innerhalb des Motivbilds zu verstecken. Die Fälschungssicherheit der Darstellungsanordnung kann so deutlich erhöht werden, ohne das visuelle Erscheinungsbild des dargestellten Sollbilds bei der Betrachtung zu beeinträchtigen. Da die Abmessungen der informationstragenden Bildstrukturen des vorgegebenen Bildmotivs unterhalb der Auflösungsgrenze des Auges, d.h. in Bereichen unterhalb etwa einer Winkelminute liegen, bildet das Bildmotiv eine mit bloßem Auge unsichtbare Codierung innerhalb des Motivbilds, die beispielsweise mit einem Mikroskop nachgewiesen werden kann.

Die erfindungsgemäßen Mikroinformationsbereiche erstrecken sich vorzugsweise jeweils über mehrere Zellen des Motivbilds. Die Mikroinformationsbereiche können sich dabei jeweils aus einer Mehrzahl von Zellen des Motivbilds zusammensetzen. Vorzugsweise sind die Mikroinformationsbereiche jedoch mit beliebiger Form abweichend von der Zelleneinteilung ausgebildet und schneiden dann zumindest teilweise die Zellengrenzen der Motivbildzellen.

In vorteilhaften Gestaltungen weisen die informationstragenden Bildstrukturen Abmessungen auf, die unterhalb etwa 100 $\mu$m liegen, so dass diese bei einem Betrachtungsabstand von etwa 30 cm vom menschlichen Auge nicht aufgelöst werden können und sich die rekonstruierten Teilsollbilder der ersten und zweiten Mikroinformationsbereiche bei Betrachtung mit dem Betrachtungsraster für das menschliche Auge zu dem Sollbild überlagern.

Die informationstragenden Strukturen liegen mit Vorteil in Form von Pixeln oder Strichen vor. In ihrer Gesamtheit bilden sie das vorgegebene Bildmotiv.

In vorteilhaften Gestaltungen sind die Mikroinformationsbereiche in Form alphanumerischer Zeichen, einer alphanumerischen Zeichenfolge, z. B. eines Textes, oder eines Logos angeordnet. Die in Form alphanumerischer Zeichen angeordneten Mikroinformationsbereiche weisen mit Vorteil eine laterale Abmessung von 300 $\mu$m oder weniger, vorzugsweise von 200 $\mu$m oder weniger, und besonders bevorzugt von 150 $\mu$m oder weniger auf. Damit liegen die Abmessungen der informationstragenden Bildstrukturen der alphanumerischen Zeichen, d. h. die Strichstärken, unterhalb der Auflösungsgrenze des menschlichen Auges, da diese im Allgemeinen etwa 1/10 bis 1/3 der lateralen Abmessungen der alphanumerischen Zeichen betragen.

In vorteilhaften Gestaltungen bietet es sich an, dass sich die Bildmotive der Mikroinformationsbereiche innerhalb des Motivbilds periodisch wiederholen. In anderen vorteilhaften Gestaltungen wiederholen sich die Bildmotive der Mikroinformationsbereiche innerhalb des Motivbilds in unregelmäßiger Abfolge.

Alternativ oder zusätzlich kann vorgesehen sein, dass sich die in unterschiedlichen vorgegebenen Bereichen innerhalb des Motivbilds jeweils angeordneten ersten und zweiten Mikroinformationsbereiche voneinander unterscheiden, so dass sich die versteckten Bildmotive der jeweiligen Mikroinformationsbereiche über die Ausdehnung des Motivbilds ändern. In dem Motivbild lassen sich auf diese Weise bei gleichem visuellen Erscheinungsbild des dargestellten Sollbilds mehrere unterschiedliche, mit bloßem Auge unsichtbare Codierungen vorsehen.

In einer vorteilhaften, besonders einfachen Ausgestaltung enthalten die Zellen des Motivbilds jeweils abgebildete Bereiche nur eines der Teilsollbilder, wobei die ersten und zweiten Mikroinformationsbereiche abgebildete Bereiche unterschiedlicher Teilsollbilder enthalten.

In einer vorteilhaften Erfindungsvariante stellt die Darstellungsanordnung eine Moiré-Vergrößerungsanordnung dar, bei der die abgebildeten Bereiche der Zellen des Motivbilds jeweils verkleinerte Abbilder der Teilsollbilder darstellen, die vollständig innerhalb einer Zelle Platz finden. Die Anordnung von Zellen des Motivbilds und/ oder das Betrachtungsraster weist dabei mit Vorteil in ihren periodischen oder zumindest lokal periodischen Bereichen keine Symmetrieachse in der Ebene der Anordnung bzw. des Rasters auf. In einer anderen bevorzugten Ausgestaltung bewegt sich das vollständige Sollbild beim Kippen der Darstellungsanordnung in eine vorgegebene Richtung, die mit der Kipprichtung einen Winkel $\gamma$ ungleich 0° und ungleich 90° einschließt. In einer weiteren bevorzugten Ausgestaltung bilden die Anordnung von Zellen des Motivbilds und das Betrachtungsraster ungleichartige Gitter, die so aufeinander abgestimmt sind, dass beim Kippen der Darstellungsanordnung ein orthoparallaktischer Bewegungseffekt des Sollbilds auftritt.

In einer alternativen, ebenfalls vorteilhaften Erfindungsvariante stellt die Darstellungsanordnung eine mikrooptische Vergrößerungsanordnung vom Moirétyp dar, bei der die abgebildeten Bereiche mehrerer beabstandeter Zellen des Motivbilds zusammengenommen jeweils ein verkleinertes Abbild eines der Teilsollbilder darstellt, dessen Ausdehnung größer als eine Zelle des Motivbilds ist.

Während bei den oben genannten Moiré-Vergrößerungsanordnungen die abgebildeten Bereiche der Zellen des Motivbilds jeweils verkleinerte Abbilder der Teilsollbilder darstellen, die vollständig in eine Zelle des Motivbilds passen müssen, ist dies bei Modulo-Vergrößerungsanordnungen nicht erforderlich. Nach einer weiteren, ebenfalls vorteilhaften Erfindungsvariante stellt die Darstellungsanordnung daher eine Modulo-Vergrößerungsanordnung dar, bei der die abgebildeten Bereiche der Zellen des Motivbilds jeweils durch eine Modulo-Operation abgebildete, nicht vollständige Ausschnitte eines oder mehrerer der Teilsollbilder darstellen.

Alle beschriebenen Varianten können mit zweidimensionalen Betrachtungselementrastern, insbesondere Linsenrastern, in Gitteranordnungen beliebiger niederer oder höherer Symmetrie oder in Zylinderlinsen-Anordnungen ausgeführt werden. Alle Anordnungen können auch für gekrümmte Flächen berechnet werden, wie grundsätzlich in der Druckschrift WO 2007/076952 A2 beschrieben, deren Offenbarungsgehalt insoweit in die vorliegende Anmeldung aufgenommen wird.

In einer bevorzugten Ausgestaltung sind die Betrachtungselemente des Betrachtungsrasters periodisch oder lokal periodisch angeordnet, wobei sich im letzteren Fall die lokalen Periodenparameter im Verhältnis zur Periodizitätslänge vorzugsweise nur langsam ändern. Die Periodizitätslänge bzw. die lokale Periodizitätslänge liegt vorzugsweise zwischen 3 $\mu$m und 50 $\mu$m, bevorzugt zwischen 5 $\mu$m und 30 $\mu$m, besonders bevorzugt zwischen etwa 10 $\mu$m und etwa 20 $\mu$m. Möglich ist auch eine abrupte Änderung der Periodizitätslänge, wenn diese zuvor über eine im Vergleich zur Periodizitätslänge große Strecke, beispielsweise für mehr als 20, 50 oder 100 Periodizitätslängen, konstant oder nahezu konstant gehalten wurde.

Die Betrachtungselemente können durch nicht zylindrische Mikrolinsen oder Mikrohohlspiegel, insbesondere durch Mikrolinsen oder Mikrohohlspiegel mit einer kreisförmigen oder polygonal begrenzten Basisfläche gebildet sein, oder auch durch lang gestreckte Zylinderlinsen oder Zylinderhohlspiegel, deren Ausdehnung in Längsrichtung mehr als 250 $\mu$m, bevorzugt mehr als 300 $\mu$m, besonders bevorzugt mehr als 500 $\mu$m und insbesondere mehr als 1 mm beträgt. In weiteren bevorzugten Erfindungsvarianten sind die Betrachtungselemente durch Lochblenden, Schlitzblenden, mit Spiegeln versehene Loch- oder Schlitzblenden, asphärische Linsen, Fresnellinsen, GRIN-Linsen (Gradient Refraction Index), Zonenplatten, holographische Linsen, Hohlspiegel, Fresnelspiegel, Zonenspiegel oder andere Elemente mit fokussierender oder auch ausblendender Wirkung gebildet.

In einer vorteilhaften Erfindungsvariante sind das Betrachtungsraster und das Motivbild der Darstellungsanordnung fest miteinander verbunden und bilden so ein Sicherheitselement mit beabstandet übereinander angeordnetem Betrachtungsraster und Motivbild. Das Motivbild und das Betrachtungsraster sind dabei mit Vorteil an gegenüberliegenden Flächen einer optischen Abstandsschicht angeordnet. Das Sicherheitselement kann insbesondere ein Sicherheitsfaden, ein Aufreißfaden, ein Sicherheitsband, ein Sicherheitsstreifen, ein Patch oder ein Etikett zum Aufbringen auf ein Sicherheitspapier, Wert- oder Ausweisdokument oder dergleichen sein. Die Gesamtdicke des Sicherheitselements liegt vorzugsweise unterhalb von 50 $\mu$m, bevorzugt unterhalb von 30 $\mu$m und besonders bevorzugt unterhalb von 20 $\mu$m.

Nach einer anderen, ebenfalls vorteilhaften Erfindungsvariante sind das Betrachtungsraster und das Motivbild der Darstellungsanordnung so an verschiedenen Stellen eines Datenträgers angeordnet, dass das Betrachtungsraster und das Motivbild zur Selbstauthentifizierung übereinanderlegbar sind und im übereinandergelegten Zustand ein Sicherheitselement bilden. Das Betrachtungsraster und das Motivbild sind insbesondere durch Biegen, Falten, Knicken oder Klappen des Datenträgers übereinanderlegbar.

Gemäß einer weiteren, ebenfalls vorteilhaften Erfindungsvariante ist das Motivbild von einer elektronischen Anzeigeeinrichtung angezeigt und ist das Betrachtungsraster zur Betrachtung des angezeigten Motivbilds fest mit der elektronischen Anzeigeeinrichtung verbunden. Statt mit der elektronischen Anzeigeeinrichtung fest verbunden zu sein, kann das Betrachtungsraster auch ein separates Betrachtungsraster sein, das zur Betrachtung des angezeigten Motivbilds auf oder vor die elektronische Anzeigeeinrichtung bringbar ist.

Im Rahmen dieser Beschreibung kann das Sicherheitselement also sowohl als permanentes Sicherheitselement durch ein fest miteinander verbundenes Betrachtungsraster und Motivbild gebildet sein als auch durch ein räumlich getrennt vorliegendes Betrachtungsraster und ein zugehöriges Motivbild, wobei die beiden Elemente bei Übereinanderlegen ein temporär erkennbares Sicherheitselement bilden.

Die Erfindung enthält auch ein Verfahren zur Herstellung einer Darstellungsanordnung der geschilderten Art, bei dem

- ein darzustellendes Sollbild in zwei oder mehr Teilsollbilder zerlegt wird,

- in einer Motivebene ein Motivbild erzeugt wird, das in eine Mehrzahl von periodisch oder zumindest lokal periodisch angeordneten Zellen eingeteilt wird, in denen jeweils abgebildete Bereiche eines oder mehrerer der Teilsollbilder angeordnet werden,

- ein Betrachtungsraster aus einer Mehrzahl von Betrachtungsrasterelementen zur Betrachtung des Motivbilds mit dem Betrachtungsraster erzeugt wird, wobei das Betrachtungsraster bei Betrachtung des Motivbilds das vollständige Sollbild aus den in den Zellen angeordneten abgebildeten Bereichen rekonstruiert,

- wobei das Motivbild unabhängig von der Zelleneinteilung in zumindest erste und zweite Mikroinformationsbereiche aufgeteilt wird, in denen die Zellen jeweils mit unterschiedlichen Kombinationen von abgebildeten Bereichen der Teilsollbilder gefüllt werden, und wobei die Mikroinformationsbereiche in Form vorgegebener Bildmotive angeordnet werden, die informationstragende Bildstrukturen aufweisen, deren Abmessungen unterhalb der Auflösungsgrenze des menschlichen Auges liegen.

Das durch die Verbindung von Betrachtungsraster und Motivbild erzeugte Sicherheitselement stellt in allen Erfindungsaspekten bevorzugt einen Sicherheitsfaden, einen Aufreißfaden, ein Sicherheitsband, einen Sicherheitsstreifen, einen Patch oder ein Etikett zum Aufbringen auf ein Sicherheitspapier, Wert- oder Ausweisdokument oder dergleichen dar. In einer vorteilhaften Ausgestaltung kann das Sicherheitselement einen transparenten oder ausgesparten Bereich eines Datenträgers überspannen. Dabei können auf unterschiedlichen Seiten des Datenträgers unterschiedliche Erscheinungsbilder realisiert werden. Auch beidseitige Gestaltungen kommen infrage, bei denen beiderseits eines Motivbilds Betrachtungsraster angeordnet sind. Weiter kann das Motivbild mit Vorteil von einer elektronischen Anzeigeeinrichtung angezeigt sein. Das Betrachtungsraster kann dabei zur Betrachtung des angezeigten Motivbilds fest mit der elektronischen Anzeigeeinrichtung verbunden sein, oder kann ein separates Betrachtungsraster sein, das auf oder vor die elektronische Anzeigeeinrichtung bringbar ist.

Die erfindungsgemäßen Rasterbildanordnungen zur Darstellung des in zwei oder mehr Teilsollbilder zerlegten Sollbildes können mit zumindest einer weiteren Rasterbildanordnung zur Darstellung des nicht in Teilsollbilder zerlegten Sollbildes kombiniert werden. Weiter können die erfindungsgemäßen Rasterbildanordnungen auch mit anderen Sicherheitsmerkmalen kombiniert werden, beispielsweise mit diffraktiven Strukturen, mit Hologrammstrukturen in allen Ausführungsvarianten, metallisiert oder nicht metallisiert, mit Subwellenlängenstrukturen, metallisiert oder nicht metallisiert, mit Subwellenlängengittern, mit Schichtsystemen, die beim Kippen einen Farbwechsel zeigen, semitransparent oder opak, mit diffraktiven optischen Elementen, mit refraktiven optischen Elementen, wie etwa Prismenstrahlformern, mit speziellen Lochformen, mit Sicherheitsmerkmalen mit gezielt eingestellter elektrischer Leitfähigkeit, mit eingearbeiteten Stoffen mit magnetischer Codierung, mit Stoffen mit phosphoreszierender, fluoreszierender oder lumineszierender Wirkung, mit Sicherheitsmerkmalen auf Grundlage von Flüssigkristallen, mit Mattstrukturen, mit Mikrospiegeln, mit Elementen mit Jalousie-Effekt oder mit Sägezahnstrukturen. Weitere Sicherheitsmerkmale, mit denen die erfindungsgemäßen Rasterbildanordnungen kombiniert werden können, sind in der Druckschrift WO 2005/ 052650 A2 auf den Seiten 71 bis 73 angegeben; diese werden insoweit in die vorliegende Beschreibung aufgenommen.

Schließlich enthält die Erfindung auch ein Sicherheitspapier für die Herstellung von Sicherheits- oder Wertdokumenten, wie Banknoten, Schecks, Ausweiskarten, Urkunden oder dergleichen, mit einer Darstellungsanordnung der oben beschriebenen Art. Die Erfindung enthält weiter einen Datenträger, insbesondere einen Markenartikel, ein Wertdokument, einen dekorativen Artikel, wie eine Verpackung, Postkarten oder dergleichen, mit einer Darstellungsanordnung der oben beschriebenen Art. Das Betrachtungsraster und/oder das Motivbild der Darstellungsanordnung können dabei vollflächig, auf Teilflächen oder in einem Fensterbereich des Datenträgers angeordnet sein.

Die Erfindung betrifft auch eine elektronische Anzeigeanordnung mit einer elektronischen Anzeigeeinrichtung, insbesondere einem Computer- oder Fernsehbildschirm, einer Steuereinrichtung und einer Darstellungsanordnung der oben beschriebenen Art. Die Steuereinrichtung ist dabei ausgelegt und eingerichtet, das Motivbild der Darstellungsanordnung auf der elektronischen Anzeigeeinrichtung anzuzeigen. Das Betrachtungsraster zur Betrachtung des angezeigten Motivbilds kann dabei fest mit der elektronischen Anzeigeeinrichtung verbunden sein oder kann ein separates Betrachtungsraster sein, das zur Betrachtung des angezeigten Motivbilds auf oder vor die elektronische Anzeigeeinrichtung bringbar ist.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:

Fig. 1 eine schematische Darstellung einer Banknote mit einem eingebetteten Sicherheitsfaden und einem aufgeklebten Transferelement,

Fig. 2 schematisch den Schichtaufbau eines erfindungsgemäßen Sicherheitselements im Querschnitt,

Fig. 3 stark schematisch eine Modulo-Vergrößerungsanordnung zur Definition der verschiedenen Ebenen,

Fig. 4 in (a) als darzustellendes Sollbild ein Kreuzmotiv, das in die beiden, in (b) gezeigten Teilsollbilder zerlegt ist, und in (c) ein vorgegebenes Linsenarray mit sphärischen Mikrolinsen, die in einem einfachen, gedrehten Quadratgitter angeordnet sind,

Fig. 5 in (a) und (b) jeweils einen Ausschnitt aus den periodischen Anordnungen der den Teilsollbildern von Fig. 4 (b) zugeordneten Mikromotivelemente in einem Motivraster U,

Fig. 6 in (a) eine erfindungsgemäße Aufteilung des Motivbilds in erste und zweite Mikroinformationsbereiche, in (b) schematisch die Anordnung der zur Verdeutlichung unterschiedlich gefüllten Mikromotivelemente in den ersten bzw. zweiten Mikroinformationsbereichen und in (c) das Erscheinungsbild des fertigen Motivbilds ohne die zusätzlichen Hervorhebungen der unterschiedlichen Bereiche, und

Fig. 7   in (a) bis (c) eine Darstellung wie in Fig. 6 für ein Ausführungsbeispiel, bei dem die Aufteilung des Motivbilds in Mikroinformationsbereiche nicht der Orientierung der Motivbildzellen folgt.

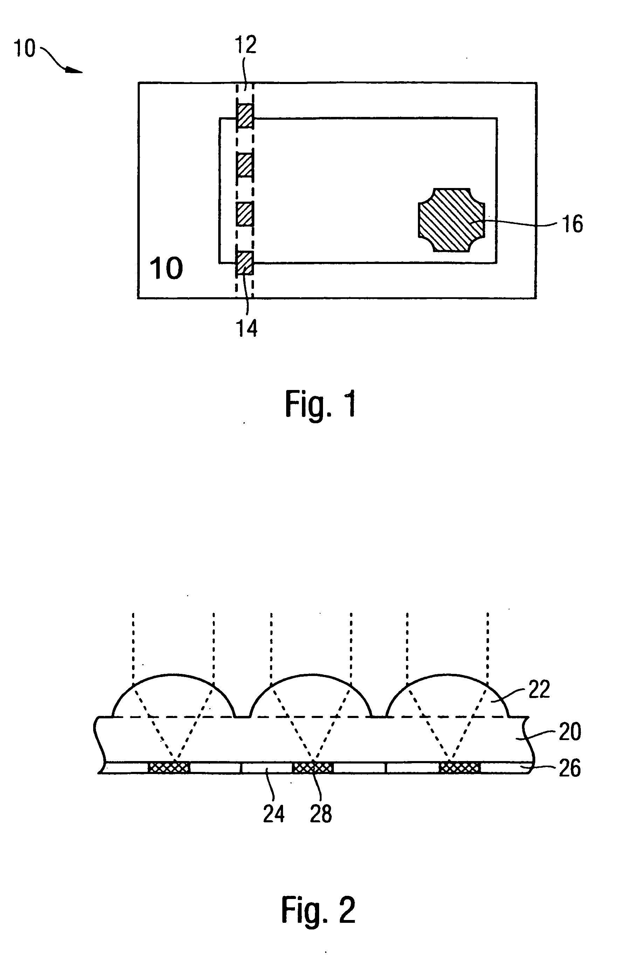

Die Erfindung wird nun am Beispiel von Sicherheitselementen für Banknoten erläutert. Fig. 1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt einen Sicherheitsfaden 12 dar, der an bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet. Das Sicherheitselement 16 kann auch in Form einer Abdeckfolie ausgebildet sein, die über einem Fensterbereich oder einer durchgehenden Öffnung der Banknote angeordnet ist. Das Sicherheitselement kann für Betrachtung in Aufsicht, Durchsicht oder für Betrachtung sowohl in Aufsicht als auch in Durchsicht ausgelegt sein. Auch beidseitige Gestaltungen kommen infrage, bei denen beiderseits eines Motivbilds Linsenraster angeordnet sind.

Sowohl der Sicherheitsfaden 12 als auch das Transferelement 16 können eine Moire-Vergrößerungsanordnung, eine mikrooptische Vergrößerungsanordnung vom Moirétyp oder eine Modulo-Vergrößerungsanordnung nach einem Ausführungsbeispiel der Erfindung enthalten. Da Letztgenannte die Moiré-Vergrößerungsanordnungen und die Vergrößerungsanordnungen vom Moirétyp als Spezialfälle enthält, wird nachfolgend allgemein von Modulo-Vergrößerungsanordnungen gesprochen, wenn eine dieser Gestaltungen angesprochen ist.

Fig. 2 zeigt schematisch den Schichtaufbau eines erfindungsgemäßen Sicherheitselements im Querschnitt, wobei nur die für die Erläuterung des Funktionsprinzips erforderlichen Teile des Schichtaufbaus dargestellt sind. Das Sicherheitselement enthält einen Träger 20 in Form einer transparenten Kunststofffolie, im Ausführungsbeispiel einer etwa 20 $\mu$m dicken Polyethylenterephthalat(PET)-Folie. Die Oberseite der Trägerfolie 20 ist mit einer rasterförmigen Anordnung von Mikrolinsen 22 versehen, die auf der Oberfläche der Trägerfolie ein zweidimensionales Bravais-Gitter mit einer vorgewählten Symmetrie bilden. Das Bravais-Gitter kann beispielsweise eine hexagonale Gittersymmetrie aufweisen. Möglich sind jedoch auch andere, insbesondere niedrigere Symmetrien und damit allgemeinere Formen, wie etwa die Symmetrie eines Parallelogramm-Gitters.

Der Abstand benachbarter Mikrolinsen 22 ist vorzugsweise so gering wie möglich gewählt, um eine möglichst hohe Flächendeckung und damit eine kontrastreiche Darstellung zu gewährleisten. Die sphärisch oder asphärisch ausgestalteten Mikrolinsen 22 weisen vorzugsweise einen Durchmesser zwischen 5 $\mu$m und 50 $\mu$m und insbesondere einen Durchmesser zwischen lediglich 10 $\mu$m und 35 $\mu$m auf und sind daher mit bloßem Auge nicht zu erkennen. Es versteht sich, dass bei anderen Gestaltungen auch größere oder kleinere Abmessungen infrage kommen. Beispielsweise können die Mikrolinsen bei Modulo-Vergrößerungsanordnungen für Dekorationszwecke einen Durchmesser zwischen 50 $\mu$m und 5 mm aufweisen, während bei Modulo-Vergrößerungsanordnungen, die nur mit einer Lupe oder einem Mikroskop entschlüsselbar sein sollen, auch Abmessung unterhalb von 5 $\mu$m zum Einsatz kommen können.

Auf der Unterseite der Trägerfolie 20 ist eine Motivschicht 26 angeordnet, die ein in eine Mehrzahl von Zellen 24 eingeteiltes Motivbild mit Motivbildelementen 28 enthält. Die Anordnung der Gitterzellen 24 bildet ebenfalls ein zweidimensionales Bravais-Gitter mit einer vorgewählten Symmetrie.

Im Fall einer Moiré-Vergrößerungsanordnung unterscheidet sich dabei das Bravais-Gitter der Gitterzellen 24 in seiner Symmetrie und/oder in der Grö-ße seiner Gitterparameter geringfügig von dem Bravais-Gitter der Mikrolinsen 22, wie in Fig. 2 durch den Versatz der Gitterzellen 24 gegenüber den Mikrolinsen 22 angedeutet. Je nach Art und Größe des relativen Unterschieds der Symmetrie und/oder der Gitterparameter der verwendeten Bravais-Gitter entsteht bei der Betrachtung des Motivbilds ein Moire-vergrößertes Bild der Motivbildelemente 28.

Die Gitterperiode und der Durchmesser der Gitterzellen 24 liegen dabei in derselben Größenordnung wie die der Mikrolinsen 22, also vorzugsweise im Bereich von 5 $\mu$m bis 50 $\mu$m und insbesondere im Bereich von 10 $\mu$m bis 35 $\mu$m, so dass auch die Motivbildelemente 28 selbst mit bloßem Auge nicht zu erkennen sind. Bei Gestaltungen mit den oben erwähnten größeren oder kleineren Mikrolinsen sind selbstverständlich auch die Gitterzellen 24 entsprechend größer oder kleiner ausgebildet.

Die optische Dicke der Trägerfolie 20 und die Brennweite der Mikrolinsen 22 sind so aufeinander abgestimmt, dass sich die Motivschicht 26 etwa im Abstand der Linsenbrennweite befindet. Die Trägerfolie 20 bildet somit eine optische Abstandsschicht, die einen gewünschten konstanten Abstand der Mikrolinsen 22 und der Motivschicht 26 mit dem Motivbild gewährleistet.

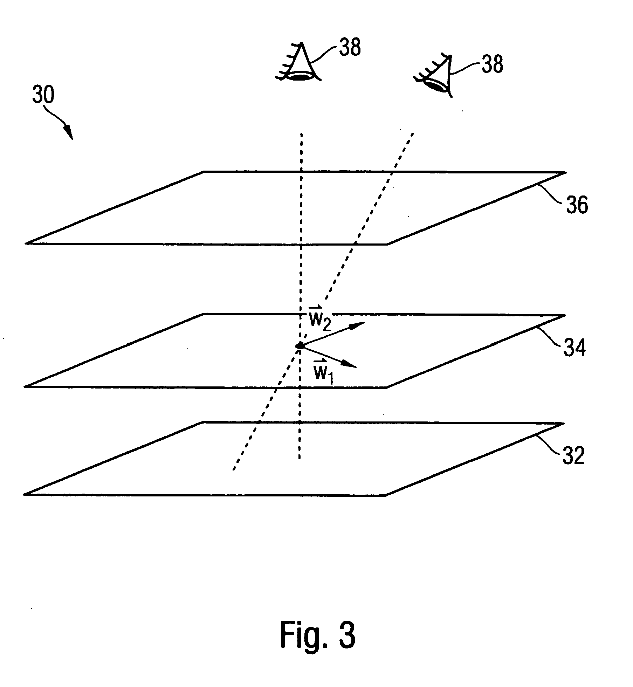

Fig. 3 zeigt schematisch eine nicht maßstäblich dargestellte Modulo-Vergrößerungsanordnung 30 mit einer Motivebene 32, in der sich das Motivbild mit seinen in Zellen angeordneten Motivbildelementen befindet, und mit einer Linsenebene 34, in der ein Mikrolinsenraster vorgesehen ist. Die Modulo-Vergrößerungsanordnung 30 erzeugt eine Bildebene 36, in der das vom Betrachter 38 wahrgenommene Sollbild erscheint. Für eine genauere Erläuterung des Funktionsprinzips und der Eigenschaften von Moiré-Vergrößerungsanordnungen, mikrooptischen Vergrößerungsanordnungen vom Moiretyp und von Modulo-Vergrößerungsanordnungen wird auf die deutschen Patentanmeldungen 10 2005 062132.5 und 10 2007 029 203.3 sowie auf die internationalen Anmeldungen PCT/EP2006/012374, PCT/EP2008/005173 und PCT/EP2008/005172 verwiesen, deren Offenbarungsgehalte insoweit in die vorliegende Anmeldung aufgenommen werden.

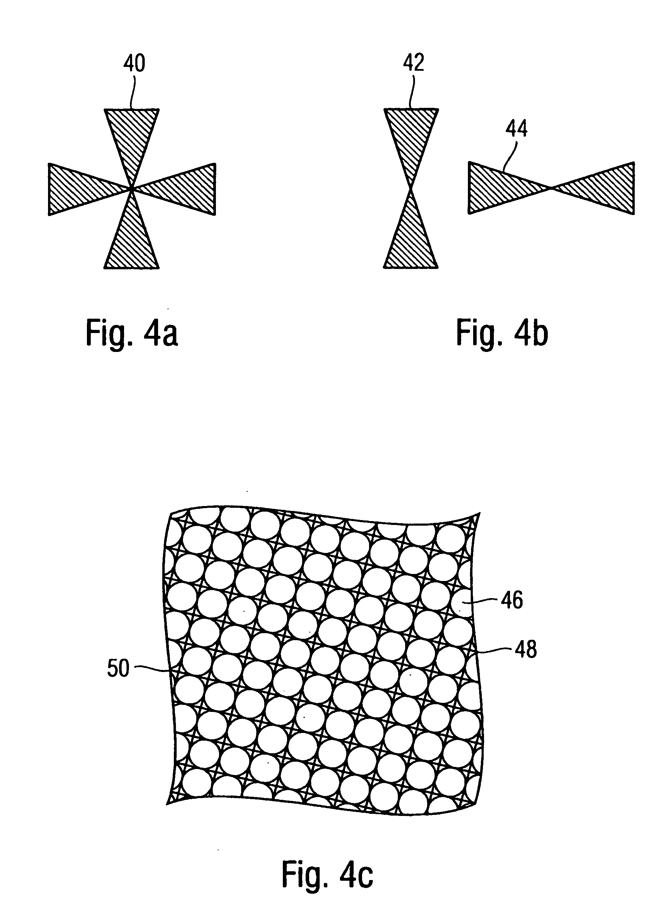

Nachfolgend wird die Erfindung der einfacheren zeichnerischen Darstellung halber überwiegend am Beispiel einer Moiré-Vergrößerungsanordnung erläutert, bei der die in den Zellen des Motivbilds angeordneten, verkleinerten Abbilder des Sollbilds 40 bzw. der Teilsollbilder 42, 44 (Fig. 4) jeweils vollständig innerhalb einer Zelle Platz finden.

Mit Bezug auf Fig. 4 zeigt Fig. 4(a) als darzustellendes Sollbild ein Kreuzmotiv 40. Erfindungsgemäß wird das Kreuzmotiv 40 in mehrere, beispielsweise zwei Teilsollbilder 42 und 44 zerlegt, wie in Fig. 4(b) gezeigt, die in der richtigen Orientierung und Lage übereinandergelegt das vollständige Sollbild ergeben.

Weiter zeigt Fig. 4(c) ein vorgegebenes Linsenarray mit sphärischen Mikrolinsen 46, die in einem einfachen, gedrehten Quadratgitter, dem Linsenraster 48 mit quadratischen Gitterzellen 50, angeordnet sind. Das Linsenraster 48 kann dabei durch eine Linsenrastermatrix W beschrieben werden, wie in den oben angegebenen deutschen und internationalen Anmeldungen ausführlich erläutert.

Das Vergrößerungs- und Bewegungsverhalten des Sicherheitselements ist im Ausführungsbeispiel der einfachen Darstellung halber in Form einer Transformationsmatrix

$$A = \begin{pmatrix} v & 0 \\ 0 & v \end{pmatrix}$$

vorgegeben, die eine reine Vergrößerung um einen Faktor v beschreibt. Im Allgemeinen kann die Matrix A neben einem Vergrößerungsverhalten auch ein Bewegungsverhalten beim Kippen der Darstellungsanordnung in verschiedene Richtungen beschreiben, wobei für eine genauere Darstellung auf die oben zitierten deutschen und internationalen Anmeldungen verwiesen wird, die eine Vielzahl an Beispielen für verschiedene Bewegungsmuster enthalten.

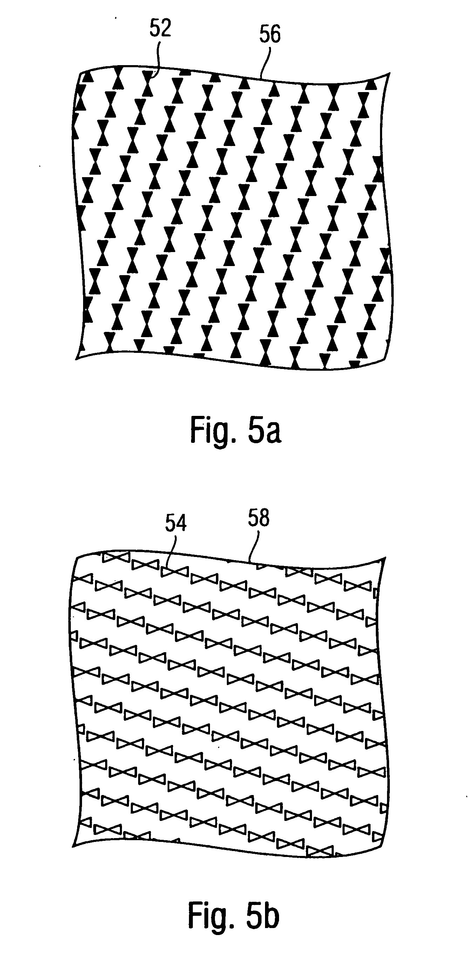

Durch Anwendung der Umkehrmatrix $A^{-1}$ auf die Teilsollbilder 42 und 44 erhält man die in dem Motivbild anzuordnenden Mikromotivelemente 52 und 54 (Fig. 5). Das Motivraster U, in dem die Mikromotivelemente 52, 54 anzuordnen sind, ergibt sich dabei zu

$$U = (I - A^{-1}) W$$

mit der Einheitsmatrix I (siehe etwa Gleichung (M2) der DE 10 2007 029 203.3).

Fig. 5 zeigt in (a) und (b) jeweils einen Ausschnitt aus den periodischen Anordnungen 56, 58 der Mikromotivelemente 52 bzw. 54 im Motivraster U, die nachfolgend als Teilmotivraster 56 und 58 bezeichnet werden. Nur zur besseren Unterscheidbarkeit sind die Mikromotivelemente 52 dabei gefüllt und die Mikromotivelemente 54 ungefüllt dargestellt. Wesentlich ist dabei, dass die den Teilsollbildern 42, 44 entsprechenden Mikromotivelemente 52 und 54 in demselben Raster U angeordnet werden, in dem bei einer herkömmlichen Moire-Vergrößerungsanordnung das dem gesamten Sollbild 40 entsprechende Mikromotivelement angeordnet würde. Mit anderen Worten weisen die beiden Teilmotivraster 56, 58 dasselbe Anordnungsraster U auf, da für beide Teilmotivraster dieselbe Vergrößerungs- und Bewegungsmatrix A verwendet wird. Ebenfalls von Bedeutung ist, dass zwischen den Teilmotivrastern 56, 58 keine Phasensprünge auftreten. Dadurch wird sichergestellt, dass die Mikromotivelemente 52 und 54 in den beiden Teilmotivrastern 56, 58 stets in korrekter Phasenbeziehung für die Überlagerung zum Gesamtsollmotiv angeordnet sind.

Durch die Aufteilung des Gesamtsollmotivs in Teilmotive wird ein weiterer Vorteil erreicht: Die einzelnen Mikromotivelemente 52 bzw. 54 sind nämlich einfacher mit der gewünschten Präzision herzustellen als ein komplettes, verkleinertes Abbild des Kreuzmotivs 40, da sich im Zentrum der Elemente jeweils nur zwei statt vier Dreiecksspitzen berühren. Die präzise Herstellung der Mikromotivelemente von Moiré- bzw. allgemein von Modulo-Vergrößerungsanordnungen ist grundsätzlich keine einfache Aufgabe, da die lateralen Abmessungen der Gitterzellen des Motivbilds typischerweise deutlich unterhalb von 100 μm und insbesondere zwischen etwa 10 μm und etwa 35 μm liegen.

Regelmäßige Ungenauigkeiten in den Mikromotivelementen, wie sie etwa durch einen durchgehenden Versatz der Spitzen der Dreiecke des Kreuzmotivs 40 entstehen können, werden bei Betrachtung des Motivbilds mit dem Betrachtungsraster Moiré-vergrößert und können das visuelle Erscheinungsbild des Sollbilds stark stören. Die vorgeschlagene Aufteilung des Sollbilds in Teilsollbilder bietet daher neben der nachfolgend beschriebenen unsichtbaren Codierung den zusätzlichen Vorteil, dass sie eine präzisere Herstellung des Motivbilds ermöglicht. Dieser Gesichtspunkt kann insbesondere bei der Art der Aufteilung in Teilsollbilder berücksichtigt werden, indem das vorgegebene Sollbild so in Teilsollbilder zerlegt wird, dass die Abbilder der einzelnen Teilsollbilder möglichst einfach zu erzeugende Formen aufweisen.

Im Ausführungsbeispiel der Fig. 4 kommt dazu beispielsweise auch eine Zerlegung in vier Teilsollbilder infrage, bei der jedes Teilsollbild eines der Dreiecke umfasst, die das Kreuzmotiv 40 bilden. Die den Teilsollbildern entsprechenden Mikromotivelemente können dann ohne zusammentreffende Spitzen erzeugt werden. Gründe für die einfachere Herstellung durch geeignete Aufteilung liegen unter anderem darin, dass die Abmessung der kleinsten herstellbaren Strukturgröße in der Regel deutlich größer als die Positioniergenauigkeit der Strukturen ist und zudem von der Art der Strukturen abhängt. So können beispielsweise die einzelnen Dreiecke des Kreuzmotivs 40 hochgenau positioniert werden, so dass sich die Spitzen bei der Überlagerung der Dreiecke bei der Betrachtung exakt im Zentrum treffen.

Allgemein könnte ein Motivbild beispielsweise alternierend aus Mikromotivelementen 52 des Teilmotivrasters 56 und aus Mikromotivelementen 54 des Teilmotivrasters 58 zusammengesetzt werden. Da die Mikromotivelemente 52, 54 im selben Raster U und ohne Phasensprünge zwischen den Teilmotivrastern angeordnet sind, entsteht bei der Betrachtung mit dem Linsenraster 48 für das menschliche Auge eine Überlagerung der Moiré-vergrößerten Teilsollbilder 42, 44 zu einem einzigen Motiv, dem Sollbild 40. Anstelle einer Gleichverteilung kann durch das Verhältnis der Flächeninhalte mit unterschiedlichen Mikromotivelementen 52, 54 auch die relative Intensität gesteuert werden, mit der die verschiedenen Teilsollbilder 42, 44 innerhalb des Gesamtbilds wahrgenommen werden.

Erfindungsgemäß wird durch eine geeignete Aufteilung des Motivbilds in Bereiche mit ersten bzw. zweiten Mikromotivelementen eine zusätzliche versteckte Bildinformation in das Motivbild eingebracht, deren informationstragende Bildstrukturen aufgrund ihrer kleinen Abmessungen mit bloßem Auge nicht wahrnehmbar sind, die jedoch beispielsweise mit einem Mikroskop als Sicherheitsmerkmal höherer Stufe verifiziert werden kann. Im Ausführungsbeispiel erfolgt die Aufteilung des Motivbilds dazu in erste und zweite Mikroinformationsbereiche, die grundsätzlich unabhängig von der Zelleneinteilung ist. In den verschiedenen Mikroinformationsbereichen sind dabei jeweils Zellen mit unterschiedlichen Mikromotivelementen enthalten, so dass die Mikroinformationsbereiche bei genauer Untersuchung voneinander unterschieden werden können.

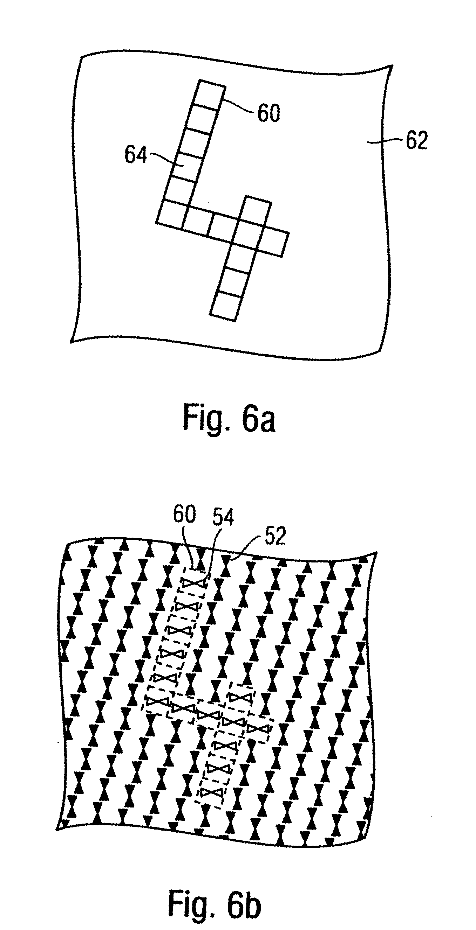

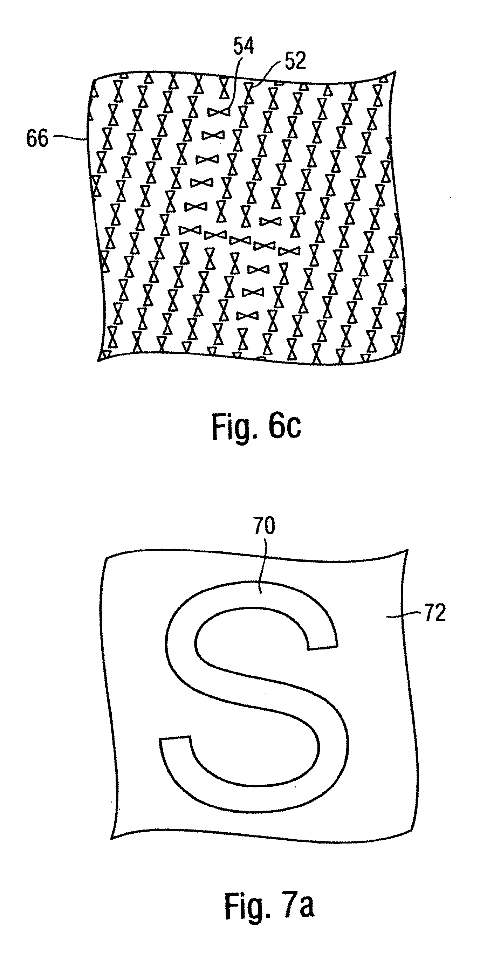

Fig. 6 zeigt zur Illustration in (a) eine Aufteilung des Motivbilds in erste Mikroinformationsbereiche 60 und zweite Mikroinformationsbereiche 62. Die ersten Mikroinformationsbereiche 60 sind dabei in Form der Ziffer "4" ausgebildet, während die zweiten Mikroinformationsbereiche 62 den umgebenden Bereich der Ziffern bilden. Die gezeigte Anordnung der Mikroinformationsbereiche wiederholt sich außerhalb des dargestellten Ausschnitts regelmäßig, so dass über die Fläche des Motivbilds eine Vielzahl erster und zweiter Mikroinformationsbereiche 60, 62 verteilt ist. Alternativ ist es auch denkbar, dass sich die gezeigte Anordnung der Mikroinformationsbereiche innerhalb des Motivbilds in unregelmäßiger Abfolge wiederholt.

Bei dem Ausführungsbeispiel der Fig. 6 sind die Mikroinformationsbereiche 60, 62 jeweils aus einer Mehrzahl von Zellen 64 des Motivbilds gebildet. Um aus den Teilmotivrastern 56, 58 der Fig. 5 ein einziges, vollständiges Motivbild zu erhalten, werden in den Zellen 64 der ersten Mikroinformationsbereiche 60 die waagrechten Mikromotivelemente 54 des Teilmotivrasters 58 angeordnet, während in den zweiten Mikroinformationsbereichen 62 die senkrechten Mikromotivelemente 52 des Teilmotivrasters 56 angeordnet werden.

Fig. 6(b) zeigt schematisch, wie die zur Verdeutlichung unterschiedlich gefüllten Mikromotivelemente 52, 54 in den ersten bzw. zweiten Mikroinformationsbereichen 60, 62 angeordnet sind. Die die ersten Mikroinformationsbereiche 60 bildenden Zellen 64 sind dabei zusätzlich gestrichelt eingezeichnet. Fig. 6(c) zeigt, wie das fertige Motivbild 66 ohne die zusätzlichen Hervorhebungen der unterschiedlichen Bereiche erscheint.

Zur Veranschaulichung wird das erfindungsgemäße Prinzip im Folgenden anhand von periodisch angeordneten Zellen einer vorgegebenen Größe erläutert und gezeigt, wie sich hierbei eine versteckte Bildinformation ergeben kann.

Die Abmessungen der informationstragenden Bildstrukturen des von den ersten Mikroinformationsbereichen 60 gebildeten Bildmotivs, hier der Ziffer "4", liegen erfindungsgemäß deutlich unterhalb der Auflösungsgrenze des menschlichen Auges. Die Ziffer "4" stellt daher eine versteckte Information innerhalb des Motivbilds dar, die beispielsweise mit einem Mikroskop oder einer anderen Vergrößerungseinrichtung nachgewiesen werden kann. Das vergrößerte Erscheinungsbild ist schematisch in Fig. 6(c) gezeigt. Beträgt die Abmessung der Zellen 64 des Motivbilds beispielsweise 30 $\mu$m x 30 $\mu$m, so erstreckt sich die Ziffer "4" der ersten Mikroinformationsbereiche 60 über einen Bereich mit einer Breite von 5 x 30 $\mu$m = 150 $\mu$m und einer Höhe von 9 x 30 $\mu$m = 270 $\mu$m. Die Abmessungen der informationstragenden Bildstrukturen, im Ausführungsbeispiel die Strichstärken der die Ziffer bildenden Strukturen, liegen dabei zwischen ungefähr 1/10 bis 1/3 der Höhe der Ziffer, also zwischen etwa 27 $\mu$m bis etwa 90 $\mu$m, so dass die Ziffer "4" mit bloßem Auge nicht auflösbar ist.

In einer hier nicht gezeigten Variante sind die ersten und zweiten Mikroinformationsbereiche 60 und 62 statt in Form der Ziffer "4" bzw. des umgebenden Bereichs der Ziffer, wie dies in dem in Fig. 6 gezeigten Ausschnitt dargestellt ist, in Form einer mehrere Ziffern enthaltenden Ziffernfolge, z. B. "1 2 3 4" bzw. der die einzelnen Ziffern umgebenden Bereiche ausgebildet. Auch diese Ausgestaltung der Mikroinformationsbereiche 60, 62 kann sich innerhalb des Motivbilds entsprechend periodisch oder in unregelmäßiger Abfolge wiederholen.

Da die beiden Teilmotivraster 56 und 58 der Mikromotivelemente dieselbe Rasterung U aufweisen und beim Übergang zwischen den ersten und zweiten Mikroinformationsbereichen 60, 62 keine Phasensprünge auftreten, stehen die Mikromotivelemente 52, 54 im kombinierten Motivbild 66 in korrektem Phasenbezug, so dass sich die Moiré-vergrößerten Teilsollbilder 42, 44 bei Betrachtung mit dem Linsenraster 48 zum vollständigen Sollbild 40 ergänzen.

Die relative Intensität der Teilsollbilder kann durch das Flächenverhältnis der ersten und zweiten Mikroinformationsbereiche 60, 62 nach Wunsch eingestellt werden. Soll trotz unterschiedlicher Flächenverteilung gleiche Helligkeit der Teilsollbilder erreicht werden, so kann die Rolle der ersten und zweiten Mikroinformationsbereiche periodisch vertauscht werden. Beispielsweise können die ersten Mikroinformationsbereiche 60 alternierend mit ersten 52 und zweiten Mikromotivelementen 54 und die zweiten Mikroinformationsbereiche 62 entsprechend alternierend mit zweiten 54 und ersten Mikromotivelementen 52 gefüllt werden, so dass sich insgesamt gleiche Flächenanteile für die ersten und zweiten Mikromotivelemente ergeben. Das gleiche Ergebnis lässt sich beispielsweise auch dadurch erzielen, dass die Rollenvertauschung der ersten und zweiten Mikroinformationsbereiche über die Fläche des Motivbilds statistisch erfolgt.

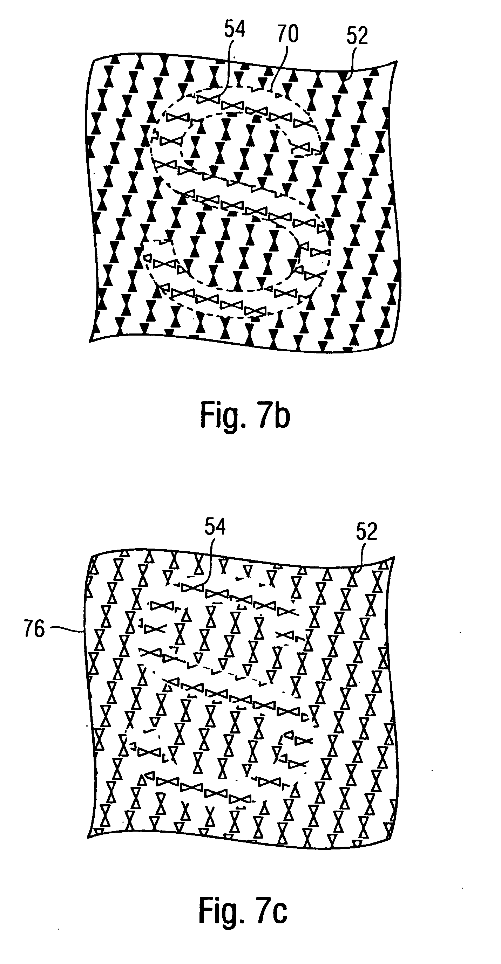

Die Aufteilung des Motivbilds in erste und zweite Mikroinformationsbereiche muss nicht der Orientierung der Motivbild-Zellen folgen, sondern ist unabhängig von der Zelleneinteilung des Motivbilds. Fig. 7 zeigt dazu in (a) eine Aufteilung des Motivbilds in erste Mikroinformationsbereiche 70 und zweite Mikroinformationsbereiche 72, wobei die ersten Mikroinformationsbereiche 70 den Buchstaben "S" darstellen, während die zweiten Mikroinformationsbereiche 72 den umgebenden Bereich des Buchstabens bilden. Auch hier kann sich die Anordnung der Mikroinformationsbereiche außerhalb des in (a) gezeigten Ausschnitts regelmäßig oder auch in unregelmäßiger Abfolge wiederholen, so dass über die Fläche des Motivbilds eine Vielzahl erster und zweiter Mikroinformationsbereiche 70, 72 verteilt ist.

Um ein einziges, vollständiges Motivbild zu erhalten, sind in den ersten Mikroinformationsbereichen 70 die waagrechten Mikromotivelemente 54 des Teilmotivrasters 58 angeordnet, während in den zweiten Mikroinformationsbereichen 72 die senkrechten Mikromotivelemente 52 des Teilmotivrasters 56 angeordnet sind.

Fig. 7(b) zeigt schematisch, wie die zur Verdeutlichung wiederum unterschiedlich gefüllten Mikromotivelemente 52, 54 in den ersten bzw. zweiten Mikroinformationsbereichen 70, 72 angeordnet sind. Im Unterschied zur Ausgestaltung der Fig. 6, bei der der Umriss der Mikroinformationsbereiche 60, 62 den Zellengrenzen folgte, schneiden die beliebig ausgebildeten Umrisse der Mikroinformationsbereiche 70, 72 die Zellengrenzen, so dass von manchen Zellen nur Teile in die Mikroinformationsbereiche 70, 72 übertragen werden. Fig. 7(c) zeigt, wie das fertige Motivbild 76 ohne die zusätzlichen Hervorhebungen der unterschiedlichen Bereiche erscheint.

Auch im Ausführungsbeispiel der Fig. 7 liegen die Abmessungen der Strukturen des von den ersten Mikroinformationsbereichen 70 gebildeten Buchstabens "S" deutlich unterhalb der Auflösungsgrenze des menschlichen Auges. Dieser stellt daher eine versteckte Information innerhalb des Motivbilds dar, deren Vorliegen mit einem Mikroskop oder einer anderen Vergrößerungseinrichtung nachgewiesen werden kann (Fig. 7(c)). Beträgt die Abmessung der Zellen des Motivbilds beispielsweise 30 $\mu$m x 30 um, so weist der Buchstabe "S" der Fig. 7(c) eine Breite von 230 $\mu$m und eine Höhe von 300 $\mu$m auf. Die Abmessungen der den Buchstaben bildenden Strukturen, d.h. die Strichstärken, die ungefähr 1/10 bis 1/3 der Höhe des Buchstabens betragen, liegen demnach zwischen etwa 30 $\mu$m bis etwa 100 $\mu$m. Auch der Buchstabe "S" ist damit mit bloßem Auge nicht auflösbar.

Da die beiden Teilmotivraster 56 und 58 der Mikromotivelemente dieselbe Rasterung U aufweisen und beim Übergang zwischen den ersten und zweiten Mikroinformationsbereichen 70, 72 keine Phasensprünge auftreten, stehen die Mikromotivelemente 52, 54 im kombinierten Motivbild 76 in korrektem Phasenbezug, so dass sich die Moiré-vergrößerten Teilsollbilder 42,44 bei Betrachtung mit dem Linsenraster 48 zum vollständigen Sollbild 40 ergänzen. Es versteht sich, dass auch hier die relative Intensität der Teilsollbilder durch das Flächenverhältnis der ersten und zweiten Mikroinformationsbereiche nach Wunsch eingestellt werden kann. Die relative Intensität der Teilsollbilder lässt sich auch durch die Dichte der Mikromotivelemente 52, 54 in den ersten und zweiten Mikroinformationsbereichen 70, 72 beeinflussen, beispielsweise indem ein Teil der Mikromotivelemente in einem der Mikroinformationsbereiche weggelassen wird.

In einer alternativen Ausgestaltung können sich die von den ersten und zweiten Mikroinformationsbereichen gebildeten Bildmotive über die Fläche des Motivbilds ändern. Beispielsweise sind in einem ersten Flächenbereich die ersten Mikroinformationsbereiche, wie in Fig. 7 gezeigt, in Form des Buchstabens "S" und die zweiten Mikroinformationsbereiche durch den den Buchstaben umgebenden Bereich ausgebildet, während in einem zweiten Flächenbereich des Motivbilds die ersten Mikroinformationsbereiche in Form eines Logos und die zweiten Mikroinformationsbereiche durch den das Logo umgebenden Bereich ausgebildet sind. In dem Motivbild lassen sich auf diese Weise bei gleichem visuellen Erscheinungsbild des dargestellten Sollbilds mehrere unterschiedliche, mit bloßem Auge unsichtbare Codierungen vorsehen.

Anstelle einer einfachen Ziffer oder eines Buchstabens, wie in Figuren 6 und 7 zur Illustration gezeigt, können die Mikroinformationsbereiche im Allgemeinen eine beliebige Form aufweisen und beispielsweise auch Symbole, Schriftzüge, ganze Texte, Objekte jeglicher Art, Pflanzen, Tiere oder auch Menschen darstellen.

Beispielsweise können die ersten Mikroinformationsbereiche in Form der einzelnen "schwarzen" Buchstaben eines Textes ausgebildet sein, während die die Buchstaben umgebenden "weißen" Zwischenräume des Textes die zweiten Mikroinformationsbereiche bilden. Die zugrunde liegende Textseite ist dabei soweit verkleinert, dass die Höhe der Buchstaben jeweils kleiner als 300 μm ist. Da die Strichstärke der Buchstaben Ziffern je nach Schriftart ungefähr 1/10 bis 1/3 der Buchstabenhöhe beträgt, also zwischen etwa 30 μm bis etwa 100 μm liegt, ist der Text mit bloßem Auge nicht lesbar. "Weiße" und "schwarze" Bereiche liegen für das bloße Auge nicht auflösbar nebeneinander.

In einer anderen Variante können die ersten und zweiten Mikroinformationsbereiche in Form eines Bildes beliebiger Größe, beispielsweise eines Portraits, ausgebildet sein, das durch eine Gesamtheit von Pixeln oder Strichen, z. B. in Form einer Strichzeichnung gebildet ist.

Insbesondere wenn das Sollbild in mehr als zwei Teilbilder aufgeteilt ist, können die Mikroinformationsbereiche auch abgebildete Bereiche aus mehr als einem Teilsollbild enthalten und sich durch die unterschiedliche Kombination abgebildeter Bereiche unterscheiden. Ist das Sollbild beispielsweise in drei Teilsollbilder T1, T2 und T3 aufgeteilt, so könnte ein erster Mikroinformationsbereich M1 abgebildete Bereiche der Teilsollbilder T1 und T2, ein zweiter Mikroinformationsbereich M2 abgebildete Bereiche der Teilsollbilder T2 und T3, ein dritter Mikroinformationsbereich M3 abgebildete Bereiche der Teilsollbilder T1 und T3 und ein vierter Mikroinformationsbereich M4 abgebildete Bereiche nur des Teilsollbilds T1 enthalten.

Aufgrund der unterschiedlichen Füllung mit Teilsollbildern können die Mikroinformationsbereiche M1 bis M4 bei Betrachtung mit einem Mikroskop unterschieden werden. Bei der Betrachtung ohne Hilfsmittel setzen sich dagegen aufgrund des konstruktionsbedingt stets vorliegenden Phasenbezugs sowie der identischen Rasterung U die Teilsollbilder für den Betrachter zum vollständigen Sollbild zusammen. Die Mikroinformationsbereiche bilden somit auch hier eine versteckte Bildinformation innerhalb des Motivbilds. Es versteht sich, dass die relative Intensität der Teilsollbilder durch den Anteil der Teilsollbilder an den abgebildeten Bereichen der Mikroinformationsbereiche nach Belieben eingestellt werden kann.

Auch wenn das erfindungsgemäße Prinzip mit Bezug auf Moire-Vergrö-βerungsanordnungen erläutert wurde, ist es nicht auf die Anwendung bei Vergrößerungsanordnungen mit Moire-Effekt beschränkt. Vielmehr können auch die Sollbilder von mikrooptischen Vergrößerungsanordnungen vom Moirétyp oder von Modulo-Vergrößerungsanordnungen entsprechend in Teilsollbilder zerlegt werden.

Mathematisch lässt sich die Aufteilung und Codierung eines Motivbilds durch Multiplikation der Teilmotiv-Bildfunktionen mit charakteristischen Funktionen für die Mikroinformationsbereiche beschreiben:

Unter Verwendung der in der Anmeldung PCT/EP2008/005172 genauer erläuterten Terminologie zur Beschreibung von Modulo-Vergrößerungsanordnungen wird ein vorgegebenes Sollbild dabei durch eine Bildfunktion $f(x,y)$ beschrieben, die eine Helligkeitsverteilung (Graustufenbild), eine Farbverteilung (Farbbild), eine Binärverteilung (Strichzeichnung) oder auch andere Bildeigenschaften, wie Transparenz, Reflektivität, Dichte oder dergleichen, angeben kann. In den Ausführungsbeispielen der Figuren 4 bis 7 beschreibt die Bildfunktion $f(x,y)$ beispielsweise die Helligkeitsverteilung des in Fig. 4(a) gezeigten Kreuzmotivs 40.

Dieses Sollbild $f(x,y)$ wird in n Teilmotive $f_i(x,y)$ mit $n \geq 2$ aufteilt, so dass

$$f(x,y) = f_1(x,y) + f_2(x,y) + \ldots + f_n(x,y)$$

gilt. Im Ausführungsbeispiel der Figuren 4 bis 7 wird das Sollbild 40 in n=2 Teilsollbilder 42 und 44 aufgeteilt, wobei die Bildfunktionen $f_1$ und $f_2$ die Helligkeitsverteilungen der in Fig. 4(b) gezeigten Teilsollbilder 42 und 44 beschreiben.

Für zwei Teilsollbilder $f_1$ und $f_2$ ergeben sich die zugehörigen Teilmotivbildfunktionen $h_1$ und $h_2$ einer Modulo-Vergrößerungsanordnung zu

$$h_1\begin{pmatrix} x \\ y \end{pmatrix} = \left( f_1\left( \begin{pmatrix} x \\ y \end{pmatrix} + (A-I) \cdot \left( \begin{pmatrix} x \\ y \end{pmatrix} \bmod W - W \cdot \begin{pmatrix} c_1 \\ c_2 \end{pmatrix} \right) \right) \right)$$

und

$$h_2\begin{pmatrix} x \\ y \end{pmatrix} = \left( f_2\left( \begin{pmatrix} x \\ y \end{pmatrix} + (A-I) \cdot \left( \begin{pmatrix} x \\ y \end{pmatrix} \bmod W - W \cdot \begin{pmatrix} c_1 \\ c_2 \end{pmatrix} \right) \right) \right)$$

wobei die Matrix A ein gewünschtes Vergrößerungs- und Bewegungsverhalten des dargestellten Sollbilds beim seitlichen und senkrechten Kippen des Sicherheitselements beschreibt, I die 2x2-Einheitsmatrix ist, W die Linsenrastermatrix bezeichnet und der Vektor $(c_1, c_2)$ mit $0 \le c_1, c_2 < 1$ die relative Position des Zentrums der Linsen 22 (Fig. 2) innerhalb der Zellen des Motivbilds angibt. Die Modulo-Operation s mod W stellt als natürliche Erweiterung der üblichen skalaren Modulo-Operation eine Reduktion eines Vektors s in die Grundmasche des durch eine Matrix W beschriebenen Gitters dar, beschreibt also die "Phase" des Vektors s innerhalb des Gitters W. Für eine genauere Darstellung der Bedeutung der einzelnen Terme und die Verallgemeinerung auf ortsabhängige Größen wird auf die internationale Anmeldung PCT/EP2008/005172 verwiesen, deren Offenbarungsgehalt insoweit in die vorliegende Anmeldung aufgenommen wird.

In den Ausführungsbeispielen der Figuren 4 bis 7 beschreiben die Teilmotiv-bildfunktionen $h_1$ und $h_2$ gerade die in Fig. 5(a) und (b) dargestellten Anordnungen 56 und 58. Bei einer allgemeinen Modulo-Vergrößerungsanordnung müssen sich die Teilmotivbildfunktionen nicht aus periodisch wiederholten Einzelmotiven zusammensetzen, sondern können auch abgebildete Teilbereiche eines komplexen Einzel-Sollbildes darstellen.

Die Aufteilung des Bildmotivs in Mikroinformationsbereiche wird nun durch charakteristische Funktionen $g_i(x, y)$ mit i=1,2,... n, geleistet, die angegeben, ob am Ort (x,y) die Teilmotivbildfunktion $h_i$ zum Gesamtmotivbild m(x,y) beiträgt. Im Fall zweier Teilmotive sind die charakteristischen Funktionen beispielsweise gegeben durch

$$g_1 \begin{pmatrix} x \\ y \end{pmatrix} = \begin{cases} 1 & \textit{für Flächenelemente mit Teilmotiv } f_1 \\ 0 & \textit{sonst} \end{cases}$$

$$g_2 \begin{pmatrix} x \\ y \end{pmatrix} = 1 - g_1 \begin{pmatrix} x \\ y \end{pmatrix}$$

wobei $g_1$ bei dem Ausführungsbeispiel der Fig. 6 die periodische oder in unregelmäßiger Abfolge erfolgende Wiederholung der Ziffer "4", bei dem Ausführungsbeispiel der Fig. 7 die periodische oder in unregelmäßiger Abfolge erfolgende Wiederholung des Buchstabens "S" beschreibt. Es versteht sich, dass die Funktion $g_1$ auch wie oben beschrieben eine Ziffernfolge, einen beliebig langen Text oder ein Bild beliebiger Größe beschreiben kann, die sich gegebenenfalls periodisch oder in unregelmäßiger Abfolge wiederholen können.

Das Gesamtmotivbild m(x,y) ergibt sich dann zu

$$m(x,y) = h_1 \begin{pmatrix} x \\ y \end{pmatrix} \cdot g_1 \begin{pmatrix} x \\ y \end{pmatrix} + h_2 \begin{pmatrix} x \\ y \end{pmatrix} \cdot g_2 \begin{pmatrix} x \\ y \end{pmatrix},$$

stellt also eine Überlagerung der Teilmotivbildfunktion $h_1$ in Bereichen, in denen $g_1$ ungleich Null ist, und der Teilmotiv-bildfunktion $h_2$ in den anderen Bereichen dar, wie beispielsweise als Motivbild 66 in Fig. 6(c) oder als Motivbild 76 in Fig. 7(c) gezeigt.

Bei dem weiter oben angesprochenen Ausführungsbeispiel, bei dem ein Sollmotiv in drei Teilmotive T1, T2 und T3 zerlegt ist, ergeben sich analog drei Teilmotivbilder $h_1$, $h_2$ und $h_3$. Zur Erzeugung der Mikroinformationsbereiche M1 bis M4 können die charakteristischen Funktionen wie folgt gewählt werden:

$$g_1 \begin{pmatrix} x \\ y \end{pmatrix} = \begin{cases} 1 & \textit{wenn (x,y) in M1, M3 oder M4 liegt} \\ 0 & \textit{sonst} \end{cases}$$

$$g_2\begin{pmatrix} x \\ y \end{pmatrix} = \begin{cases} 1 & \text{wenn } (x,y) \text{ in M1 oder M2 liegt} \\ 0 & \textit{sonst} \end{cases}$$

$$g_3\begin{pmatrix} x \\ y \end{pmatrix} = \begin{cases} 1 & \text{wenn } (x,y) \text{ in M2 oder M3 liegt} \\ 0 & \textit{sonst} \end{cases}$$

Im Gesamtmotivbild

$$m(x,y) = h_1\begin{pmatrix} x \\ y \end{pmatrix} \cdot g_1\begin{pmatrix} x \\ y \end{pmatrix} + h_2\begin{pmatrix} x \\ y \end{pmatrix} \cdot g_2\begin{pmatrix} x \\ y \end{pmatrix} + h_3\begin{pmatrix} x \\ y \end{pmatrix} \cdot g_3\begin{pmatrix} x \\ y \end{pmatrix}$$

ergeben sich dann gerade die oben beschriebenen Kombinationen von Teilsollbildern in den Mikroinformationsbereichen M1 bis M4 (M1 enthält abgebildete Bereiche der Teilsollbilder T1 und T2, M2 enthält abgebildete Bereiche der Teilsollbilder T2 und T3, M3 enthält abgebildete Bereiche der Teilsollbilder T1 und T3 und M4 enthält abgebildete Bereiche des Teilsollbilds T1).

**Patentansprüche**

1. Darstellungsanordnung für Sicherheitspapiere, Wertdokumente, elektronische Anzeigeeinrichtungen oder andere Datenträger, mit einer Rasterbildanordnung zur Darstellung eines Sollbildes (40), das in zwei oder mehr Teilsollbilder (42, 44) zerlegt ist, mit

   - einem Motivbild, das in eine Mehrzahl von periodisch oder zumindest lokal periodisch angeordneten Zellen (24) eingeteilt ist, in denen jeweils abgebildete Bereiche eines oder mehrerer der Teilsollbilder (42, 44) angeordnet sind,
   - einem Betrachtungsraster (48) aus einer Mehrzahl von Betrachtungsrasterelementen zur Betrachtung des Motivbilds mit dem Betrachtungsraster, wobei das Betrachtungsraster (48) bei Betrachtung des Motivbilds das vollständige Sollbild (40) aus den in den Zellen (24) angeordneten abgebildeten Bereichen rekonstruiert,
   - wobei das Motivbild unabhängig von der Zelleneinteilung in zumindest erste und zweite Mikroinformationsbereiche (60, 62) aufgeteilt ist, in denen die Zellen (24) jeweils unterschiedliche Kombinationen von abgebildeten Bereichen der Teilsollbilder (42, 44) enthalten, und wobei die Mikroinformationsbereiche (60, 62) in Form vorgegebener Bildmotive angeordnet sind, die informationstragende Bildstrukturen aufweisen, deren Abmessungen unterhalb der Auflösungsgrenze des menschlichen Auges liegen.

2. Darstellungsanordnung nach Anspruch 1, **dadurch gekennzeichnet, dass** die Mikroinformationsbereiche sich jeweils über mehrere Zellen des Motivbilds erstrecken, und/oder dass die Mikroinformationsbereiche zumindest teilweise die Zellengrenzen der Motivbildzellen schneiden.

3. Darstellungsanordnung nach Anspruch 1 oder 2, **dadurch gekennzeichnet, dass** die informationstragenden Bildstrukturen Abmessungen aufweisen, die unterhalb etwa 100 $\mu$m liegen, und/oder dass die informationstragenden Bildstrukturen in Form von Pixeln oder Strichen vorliegen.

4. Darstellungsanordnung nach wenigstens einem der Ansprüche 1 bis 3, **dadurch gekennzeichnet, dass** die Mikroinformationsbereiche in Form alphanumerischer Zeichen, einer alphanumerischen Zeichenfolge oder eines Logos angeordnet sind.

**5.** Darstellungsanordnung nach wenigstens einem der Ansprüche 1 bis 4, **dadurch gekennzeichnet, dass** sich die Bildmotive der Mikroinformationsbereiche innerhalb des Motivbilds periodisch oder in unregelmäßiger Abfolge wiederholen.

**6.** Darstellungsanordnung nach wenigstens einem der Ansprüche 1 bis 5, **dadurch gekennzeichnet, dass** sich die in unterschiedlichen vorgegebenen Bereichen innerhalb des Motivbilds jeweils angeordneten ersten und zweiten Mikroinformationsbereiche voneinander unterscheiden, so dass sich die Bildmotive der jeweiligen Mikroinformationsbereiche über die Ausdehnung des Motivbilds ändern.

**7.** Darstellungsanordnung nach wenigstens einem der Ansprüche 1 bis 6, **dadurch gekennzeichnet, dass** die Zellen des Motivbilds jeweils abgebildete Bereiche nur eines der Teilsollbilder enthalten und die ersten und zweiten Mikroinformationsbereiche abgebildete Bereiche unterschiedlicher Teilsollbilder enthalten.

**8.** Darstellungsanordnung nach wenigstens einem der Ansprüche 1 bis 7, **dadurch gekennzeichnet, dass** die Darstellungsanordnung eine Moiré-Vergrößerungsanordnung darstellt, bei der die abgebildeten Bereiche der Zellen des Motivbilds jeweils verkleinerte Abbilder der Teilsollbilder darstellen, die vollständig innerhalb einer Zelle Platz finden.

**9.** Darstellungsanordnung nach Anspruch 8, **dadurch gekennzeichnet, dass** die Anordnung von Zellen des Motivbilds und/ oder das Betrachtungsraster in ihren periodischen oder zumindest lokal periodischen Bereichen keine Symmetrieachse in der Ebene der Anordnung bzw. des Rasters aufweist, oder dass sich das vollständige Sollbild beim Kippen der Darstellungsanordnung in eine vorgegebene Richtung bewegt, die mit der Kipprichtung einen Winkel $\gamma$ ungleich 0° und ungleich 90° einschließt, oder dass die Anordnung von Zellen des Motivbilds und das Betrachtungsraster ungleichartige Gitter bilden, die so aufeinander abgestimmt sind, dass beim Kippen der Darstellungsanordnung ein orthoparallaktischer Bewegungseffekt des vollständigen Sollbilds auftritt.

**10.** Darstellungsanordnung nach wenigstens einem der Ansprüche 1 bis 7, **dadurch gekennzeichnet, dass** die Darstellungsanordnung eine mikrooptische Vergrößerungsanordnung vom Moiretyp darstellt, bei der die abgebildeten Bereiche mehrerer beabstandeter Zellen des Motivbilds zusammengenommen jeweils ein verkleinertes Abbild eines der Teilsollbilder darstellen, dessen Ausdehnung größer als eine Zelle des Motivbilds ist, oder dass die Darstellungsanordnung eine Modulo-Vergrößerungsanordnung darstellt, bei der die abgebildeten Bereiche der Zellen des Motivbilds jeweils durch eine Modulo-Operation abgebildete, nicht vollständige Ausschnitte eines oder mehrerer der Teilsollbilder darstellen.

**11.** Darstellungsanordnung nach wenigstens einem der Ansprüche 1 bis 10, **dadurch gekennzeichnet, dass** die Periodizitätslänge bzw. die lokale Periodizitätslänge des Betrachtungsrasters und/oder die Periodizitätslänge bzw. die lokale Periodizitätslänge der Zellen des Motivbilds zwischen 3 $\mu$m und 50 $\mu$m, bevorzugt zwischen 5 $\mu$m und 30 $\mu$m, besonders bevorzugt zwischen etwa 10 $\mu$m und etwa 20 $\mu$m liegt.

**12.** Darstellungsanordnung nach wenigstens einem der Ansprüche 1 bis 11, **dadurch gekennzeichnet, dass** die Betrachtungselemente durch nichtzylindrische Mikrolinsen oder Mikrohohlspiegel, insbesondere durch Mikrolinsen oder Mikrohohlspiegel mit einer kreisförmigen oder polygonal begrenzten Basisfläche gebildet sind, oder dass die Betrachtungselemente durch lang gestreckte Zylinderlinsen oder Zylinderhohlspiegel gebildet sind, deren Ausdehnung in Längsrichtung mehr als 250 $\mu$m, bevorzugt mehr als 300 $\mu$m, besonders bevorzugt mehr als 500 $\mu$m und insbesondere mehr als 1 mm beträgt, oder dass die Betrachtungselemente durch Lochblenden, Schlitzblenden, mit Spiegeln versehene Loch- oder Schlitzblenden, asphärische Linsen, Fresnellinsen, GRIN-Linsen (Gradient Refraction Index), Zonenplatten, holographische Linsen, Hohlspiegel, Fresnelspiegel, Zonenspiegel oder andere Elemente mit fokussierender oder auch ausblendender Wirkung gebildet sind.

**13.** Darstellungsanordnung nach wenigstens einem der Ansprüche 1 bis 12, **dadurch gekennzeichnet, dass** das Betrachtungsraster und das Motivbild fest miteinander verbunden sind, um ein Sicherheitselement mit beabstandet übereinander angeordnetem Betrachtungsraster und Motivbild zu bilden, insbesondere, dass das Motivbild und das Betrachtungsraster an gegenüberliegenden Flächen einer optischen Abstandsschicht angeordnet sind, oder dass das Betrachtungsraster und das Motivbild so an verschiedenen Stellen eines Datenträgers angeordnet sind, dass das Betrachtungsraster und das Motivbild zur Selbstauthentifizierung übereinanderlegbar sind und im übereinandergelegten Zustand ein Sicherheitselement bilden, oder dass das Motivbild von einer elektronischen Anzeigeeinrichtung angezeigt ist und das Betrachtungsraster zur Betrachtung des angezeigten Motivbilds fest mit der elektronischen Anzeigeeinrichtung verbunden ist, oder dass das Motivbild von einer elektronischen Anzeigeeinrichtung angezeigt ist und dass das Betrachtungsraster als ein separates Betrachtungsraster zur Betrachtung des angezeigten Motivbilds auf oder vor die elektronische Anzeigeeinrichtung bringbar ist.

14. Verfahren zur Herstellung einer Darstellungsanordnung nach einem der Ansprüche 1 bis 13, bei dem

- ein darzustellendes Sollbild (40) in zwei oder mehr Teilsollbilder (42, 44) zerlegt wird,
- in einer Motivebene ein Motivbild erzeugt wird, das in eine Mehrzahl von periodisch oder zumindest lokal periodisch angeordneten Zellen (24) eingeteilt wird, in denen jeweils abgebildete Bereiche eines oder mehrerer der Teilsollbilder (42, 44) angeordnet werden,
- ein Betrachtungsraster (48)aus einer Mehrzahl von Betrachtungsrasterelementen zur Betrachtung des Motivbilds mit dem Betrachtungsraster erzeugt wird, wobei das Betrachtungsraster (48) bei Betrachtung des Motivbilds das vollständige Sollbild (40) aus den in den Zellen (24) angeordneten abgebildeten Bereichen rekonstruiert,
- wobei das Motivbild unabhängig von der Zelleneinteilung in zumindest erste und zweite Mikroinformationsbereiche (60, 62) aufgeteilt wird, in denen die Zellen (24) jeweils mit unterschiedlichen Kombinationen von abgebildeten Bereichen der Teilsollbilder (42, 44) gefüllt werden, und wobei die Mikroinformationsbereiche (60, 62) in Form vorgegebener Bildmotive angeordnet werden, die informationstragende Bildstrukturen aufweisen, deren Abmessungen unterhalb der Auflösungsgrenze des menschlichen Auges liegen.

15. Verfahren nach Anspruch 14, **dadurch gekennzeichnet, dass** das Betrachtungsraster und das Motivbild fest miteinander verbunden werden, um ein Sicherheitselement mit beabstandet übereinander angeordnetem Betrachtungsraster und Motivbild zu bilden, oder dass das Betrachtungsraster und das Motivbild so an verschiedenen Stellen eines Datenträgers angeordnet werden, dass das Betrachtungsraster und das Motivbild zur Selbstauthentifizierung übereinanderlegbar sind und im übereinandergelegten Zustand ein Sicherheitselement bilden.

16. Sicherheitspapier für die Herstellung von Sicherheits- oder Wertdokumenten, wie Banknoten, Schecks, Ausweiskarten, Urkunden oder dergleichen, mit einer Darstellungsanordnung nach wenigstens einem der Ansprüche 1 bis 13.

17. Datenträger, insbesondere Markenartikel, Wertdokument, dekorativer Artikel oder dergleichen, mit einer Darstellungsanordnung nach wenigstens einem der Ansprüche 1 bis 13.

18. Elektronische Anzeigeanordnung mit einer elektronischen Anzeigeeinrichtung, insbesondere einem Computer- oder Fernsehbildschirm, einer Steuereinrichtung und einer Darstellungsanordnung nach wenigstens einem der Ansprüche 1 bis 13, wobei die Steuereinrichtung ausgelegt und eingerichtet ist, das Motivbild der Darstellungsanordnung auf der elektronischen Anzeigeeinrichtung anzuzeigen.

**Claims**

1. A depiction arrangement for security papers, value documents, electronic display devices or other data carriers, having a grid image arrangement for depicting a target image (40) that is broken down into two or more partial target images (42, 44), having

- a motif image that is subdivided into a plurality of periodically or at least locally periodically arranged cells (24) in each of which are arranged mapped regions of one or more of the partial target images (42,44),
- a viewing grid (48) composed of a plurality of viewing grid elements for viewing the motif image with the viewing grid, wherein the viewing grid (48), when the motif image is viewed, reconstructs the complete target image (40) from the mapped regions arranged in the cells (24),
- the motif image being, independently of the cell subdivision, split into at least first and second microinformation regions (60, 62) in which the cells (24) each include different combinations of mapped regions of the partial target images (42, 44), and the microinformation regions (60, 62) being arranged in the shape of specified image motifs that exhibit information-bearing image patterns whose dimensions are below the resolution limit of the human eye.

2. The depiction arrangement according to claim 1, **characterized in that** the microinformation regions each extend across multiple cells of the motif image and/or that the microinformation regions at least partially intersect the cell boundaries of the motif image cells.

3. The depiction arrangement according to claim 1 or 2, **characterized in that** the information-bearing image patterns exhibit dimensions that are below about 100 $\mu$m, and/or that the information-bearing image patterns are present in the form of pixels or lines.

4. The depiction arrangement according to at least one of claims 1 to 3, **characterized in that** the microinformation regions are arranged in the form of alphanumeric characters, an alphanumeric character string or a logo.

5. The depiction arrangement according to at least one of claims 1 to 4, **characterized in that** the image motifs of the microinformation regions repeat periodically or in irregular sequence within the motif image.

6. The depiction arrangement according to at least one of claims 1 to 5, **characterized in that** the first and second microinformation regions each arranged in different specified regions within the motif image differ from each other, such that the image motifs of the respective microinformation regions change over the expanse of the motif image.

7. The depiction arrangement according to at least one of claims 1 to 6, **characterized in that** the cells of the motif image each include mapped regions of only one of the partial target images, and the first and second microinformation regions include mapped regions of different partial target images.

8. The depiction arrangement according to at least one of claims 1 to 7, **characterized in that** the depiction arrangement constitutes a moiré magnification arrangement in which the mapped regions of the cells of the motif image each constitute scaled-down images of the partial target images, which are completely accommodated within one cell.

9. The depiction arrangement according to claim 8, **characterized in that** the arrangement of cells of the motif image and/or the viewing grid, in its periodic or at least locally periodic regions, exhibits no axis of symmetry in the plane of the arrangement or of the grid, or that upon tilting the depiction arrangement, the complete target image moves in a specified direction that, with the tilt direction, encloses an angle $\gamma$ not equal to 0° and not equal to 90°, or that the arrangement of cells of the motif image and the viewing grid form dissimilar lattices that are coordinated with each other such that, upon tilting the depiction arrangement, an orthoparallactic movement effect of the complete target image occurs.

10. The depiction arrangement according to at least one of claims 1 to 7, **characterized in that** the depiction arrangement constitutes a micro-optical moire-type magnification arrangement in which the mapped regions of multiple spaced-apart cells of the motif image constitute in each case, taken together, a scaled-down image of one of the partial target images, whose dimension is larger than one cell of the motif image, or that the depiction arrangement constitutes a modulo magnification arrangement in which the mapped regions of the cells of the motif image each constitute non-complete sections, that are mapped by a modulo operation, of one or more of the partial target images.

11. The depiction arrangement according to at least one of claims 1 to 10, **characterized in that** the periodicity length or the local periodicity length of the viewing grid and/or the periodicity length or the local periodicity length of the cells of the motif image is between 3 $\mu$m and 50 $\mu$m, preferably between 5 $\mu$m and 30 $\mu$m, particularly preferably between about 10 $\mu$m and about 20 $\mu$m.

12. The depiction arrangement according to at least one of claims 1 to 11, **characterized in that** the viewing elements are formed by non-cylindrical microlenses or concave microreflectors, especially by microlenses or concave microreflectors having a circular or polygonally delimited base area, or that the viewing elements are formed by elongated cylindrical lenses or concave cylindrical reflectors whose dimension in the longitudinal direction measures more than 250 $\mu$m, preferably more than 300 $\mu$m, particularly preferably more than 500 $\mu$m and especially more than 1 mm, or that the viewing elements are formed by circular apertures, slit apertures, circular or slit apertures provided with reflectors, aspherical lenses, Fresnel lenses, GRIN (Gradient Refractive Index) lenses, zone plates, holographic lenses, concave reflectors, Fresnel reflectors, zone reflectors or other elements having a focusing or also masking effect.

13. The depiction arrangement according to at least one of claims 1 to 12, **characterized in that** the viewing grid and the motif image are firmly joined together to form a security element having a stacked, spaced-apart viewing grid and motif image, especially **in that** the motif image and the viewing grid are arranged at opposing surfaces of an optical spacing layer, or that the viewing grid and the motif image are arranged at different positions of a data carrier such that the viewing grid and the motif image are stackable for self-authentication and, in the stacked state, form a security element, or that the motif image is displayed by an electronic display device, and the viewing grid for viewing the displayed motif image is firmly joined with the electronic display device, or that the motif image is displayed by an electronic display device, and **in that** the viewing grid, as a separate viewing grid for viewing the displayed motif image, is bringable onto or in front of the electronic display device.

**14.** A method for manufacturing a depiction arrangement according to one of claims 1 to 13, in which

- a target image (40) to be depicted is broken down into two or more partial target images (42,44),
- in a motif plane, a motif image is produced that is subdivided into a plurality of periodically or at least locally periodically arranged cells (24) in each of which are arranged mapped regions of one or more of the partial target images (42, 44),
- a viewing grid (48) composed of a plurality of viewing grid elements for viewing the motif image with the viewing grid is produced, wherein the viewing grid (48), when the motif image is viewed, reconstructs the complete target image (40) from the mapped regions arranged in the cells (24),
- the motif image is, independently of the cell subdivision, split into at least first and second microinformation regions (60, 62) in which the cells (24) are each filled with different combinations of mapped regions of the partial target images (42, 44), and the microinformation regions (60, 62) are arranged in the shape of specified image motifs that exhibit information-bearing image patterns whose dimensions are below the resolution limit of the human eye.

**15.** The method according to claim 14, **characterized in that** the viewing grid and the motif image are firmly joined together to form a security element having a stacked, spaced-apart viewing grid and motif image, or that the viewing grid and the motif image are arranged at different positions of a data carrier such that the viewing grid and the motif image are stackable for self-authentication, and, in the stacked state, form a security element.

**16.** A security paper for manufacturing security or value documents, such as banknotes, checks, identification cards, certificates or the like, having a depiction arrangement according to at least one of claims 1 to 13.

**17.** A data carrier, especially a branded article, value document, decorative article or the like, having a depiction arrangement according to at least one of claims 1 to 13.

**18.** An electronic display arrangement having an electronic display device, especially a computer or television screen, a control device and a depiction arrangement according to at least one of claims 1 to 13, the control device being designed and set up to display the motif image of the depiction arrangement on the electronic display device.

**Revendications**

**1.** Agencement de représentation pour papiers de sécurité, documents de valeur, dispositifs électroniques d'affichage ou autres supports de données, comportant un arrangement d'images tramées pour représenter une image prescrite (40), qui est décomposée en deux images prescrites partielles (42, 44) ou plus, comportant :

- une image à motifs, qui est subdivisée en un grand nombre de cellules (24), disposées périodiquement, ou d'une manière au moins localement périodique, cellules dans chacune desquelles sont disposés des domaines imagés d'une ou plusieurs des images prescrites partielles (42, 44),
- une trame d'observation (48), constituée d'un grand nombre d'éléments de trame d'observation, pour l'observation de l'image à motifs comportant la trame d'observation, la trame d'observation (48), lors de l'observation de l'image à motifs, reconstruisant l'image prescrite totale (40) à partir des domaines imagés disposés dans les cellules (24),
- l'image à motifs étant partagée, indépendamment de la subdivision des cellules, en au moins un premier et un deuxième microdomaines d'informations (60, 62), dans chacun desquels les cellules (24) contiennent des combinaisons différentes de domaines imagés des images prescrites partielles (42, 44), et les microdomaines d'informations (60, 62) étant disposés sous forme de motifs d'images prédéfinis, qui présentent les structures d'images portant les informations, dont les dimensions se trouvent en dessous du seuil de résolution de l'oeil humain.

**2.** Agencement de représentation selon la revendication 1, dans lequel chacun des microdomaines d'informations s'étend sur plusieurs cellules de l'image à motifs, et/ou que les microdomaines d'informations coupent au moins partiellement les frontières des cellules de l'image à motifs.

3. Agencement de représentation selon la revendication 1 ou 2, **caractérisé en ce que** les structures d'images portant des informations présentent des dimensions qui sont inférieures à environ 100 $\mu$m, et/ou que les structures d'images portant des informations se présentent sous forme de pixels ou de traits.

4. Agencement de représentation selon au moins l'une des revendications 1 à 3, **caractérisé en ce que** les microdomaines d'informations sont disposés sous forme de caractères alphanumériques, d'une séquence de caractères alphanumériques ou d'un logo.

5. Agencement de représentation selon au moins l'une des revendications 1 à 4, **caractérisé en ce que** les motifs d'images des microdomaines d'informations se répètent, à l'intérieur de l'image à motifs, périodiquement ou selon une séquence irrégulière.

6. Agencement de représentation selon au moins l'une des revendications 1 à 5, **caractérisé en ce que** chacun des premiers et deuxièmes microdomaines d'informations disposés dans des domaines prédéfinis différents à l'intérieur de l'image à motifs, se distinguent les uns des autres de telle sorte que les motifs d'images de chacun des microdomaines d'informations varient sur l'extension de l'image à motifs.

7. Agencement de représentation selon au moins l'une des revendications 1 à 6, **caractérisé en ce que** chacune des cellules de l'image à motifs contient des domaines imagés, seulement de l'une des images prescrites partielles, et les premiers et deuxièmes microdomaines d'informations contiennent des domaines imagés d'images prescrites partielles différentes.

8. Agencement de représentation selon au moins l'une des revendications 1 à 7, **caractérisé en ce que** l'agencement de représentation représente un agencement de grossissement avec effet de moiré, dans lequel chacun des domaines imagés des cellules de l'image à motifs représente des images réduites des images prescrites partielles, qui trouvent place en totalité à l'intérieur d'une cellule.

9. Agencement de représentation selon la revendication 8, **caractérisé en ce que** l'agencement de cellules de l'image à motifs et/ou la trame d'observation ne présentent, dans leurs domaines périodiques ou au moins localement périodiques, aucun axe de symétrie dans le plan de l'agencement ou de la trame, ou que l'image prescrite complète, lors du basculement de l'arrangement de représentation, se déplace dans une direction prédéfinie, qui avec la direction du basculement fait un angle $\gamma$ différent de 0° et différent de 90°, ou que l'agencement de cellules de l'image à motifs et la trame d'observation forment des réseaux non équivalents, qui sont adaptés l'un à l'autre de telle sorte que, lors du basculement de l'agencement de représentation, il se crée un effet de mouvement orthoparallactique de l'image prescrite complète.

10. Agencement de représentation selon au moins l'une des revendications 1 à 7, **caractérisé en ce que** l'agencement de représentation représente un agencement de grossissement micro-optique du type moiré, dans lequel les domaines imagés de plusieurs cellules, écartées les unes des autres, de l'image à motifs, représentent chacun, pris ensemble, une image réduite de l'une des images prescrites partielles, dont l'extension est supérieure à celle d'une cellule de l'image à motifs, ou que l'agencement de représentation représente un agencement de grossissement modulo, dans lequel chacun des domaines imagés des cellules de l'image à motifs représente un secteur incomplet, imagé par une opération modulo, d'une ou plusieurs des images prescrites partielles.

11. Agencement de représentation selon au moins l'une des revendications 1 à 10, **caractérisé en ce que** la longueur de périodicité ou la longueur de périodicité locale de la trame d'observation et/ou la longueur de périodicité et/ou la longueur de périodicité locale des cellules de l'image à motifs sont comprises entre 3 et 50 $\mu$m, de préférence entre 5 et 30 $\mu$m, d'une manière particulièrement préférée entre environ 10 et environ 20 $\mu$m.

12. Agencement de représentation selon au moins l'une des revendications 1 à 11, **caractérisé en ce que** les éléments d'observation sont formés par des microlentilles ou des micromiroirs concaves non cylindriques, en particulier par des microlentilles ou des micromiroirs concaves ayant une surface de base circulaire ou à délimitation polygonale, ou que les éléments d'observation sont formés par des lentilles cylindriques ou des miroirs concaves cylindriques s'étendant longitudinalement, dont l'extension dans la direction longitudinale est supérieure à 250 $\mu$m, de préférence supérieure à 300 $\mu$m, d'une manière particulièrement préférée supérieure à 500 $\mu$m et en particulier supérieure à 1 mm, ou que les éléments d'observation sont formés par des diaphragmes à trou, des diaphragmes à rideau, des diaphragmes à trou ou à rideau pourvus de miroirs, des lentilles asphériques, des lentilles de Fresnel, des lentilles GRIN (à gradient d'indice de réfraction), des lentilles zonées, des lentilles holographiques, des miroirs concaves, des miroirs de Fresnel, des miroirs zonés ou d'autres éléments ayant un effet de focalisation ou aussi de diaphragme.

**13.** Agencement de représentation selon au moins l'une des revendications 1 à 12, **caractérisé en ce que** la trame d'observation et l'image à motifs sont fermement liées l'un à l'autre, pour former un élément de sécurité comportant une trame d'observation et une image à motifs disposées l'une au-dessus de l'autre à distance l'une de l'autre, en particulier que l'image à motifs et la trame d'observation sont disposées sur des surfaces superposées d'une couche d'écartement optique, ou que la trame d'observation et l'image à motifs sont disposées sur différents emplacements d'un support de données de telle sorte que la trame d'observation et l'image à motifs puissent, pour une auto-authentification, être superposés, et à l'état superposé forment un élément de sécurité, ou que l'image à motifs est affichée par un dispositif électronique d'affichage, et la trame d'observation, pour l'observation de l'image à motifs affichée, est fermement liée au dispositif électronique d'affichage, ou que l'image à motifs est affichée par un dispositif électronique d'affichage, et que la trame d'observation peut, en tant que trame d'observation distinct, et pour l'observation de l'image à motifs affichée, être placée au-dessus ou en avant du dispositif électronique d'affichage.

**14.** Procédé de fabrication d'un agencement de représentation selon l'une des revendications 1 à 13, dans lequel

- on décompose une image prescrite (40) à représenter en deux images prescrites partielles (42, 44), ou plus,
- on produit dans un plan de motifs une image à motifs, qui est subdivisée en un grand nombre de cellules (24), disposés périodiquement ou d'une manière au moins localement périodique, cellules dans chacune desquelles des domaines imagés d'une ou plusieurs images prescrites partielles (42, 44) sont disposés,
- on produit une trame d'observation (48) à partir d'un grand nombre d'éléments de trame d'observation pour l'observation de l'image à motifs comportant la trame d'observation, la trame d'observation (48) reconstruisant, lors de l'observation de l'image à motifs, l'image prescrite complète (40) à partir des domaines imagés disposés dans les cellules (24),
- l'image à motifs étant, indépendamment de la subdivision des cellules, partagée en au moins un premier et un deuxième microdomaines d'informations (60, 62), dans chacun desquels les cellules (24) sont remplies de différentes combinaisons de domaines imagés des images prescrites (42, 44), et les microdomaines d'informations (60, 62) étant disposés sous forme de motifs d'images prédéfinis, qui présentent des structures d'images portant des informations, structures dont les dimensions sont inférieures au seuil de résolution de l'oeil humain.

**15.** Procédé selon la revendication 14, **caractérisé en ce que** la trame d'observation et l'image à motifs sont fermement liées l'un à l'autre, pour former un élément de sécurité comportant une trame d'observation et une image à motifs disposées l'une au-dessus de l'autre à distance l'une de l'autre, ou que la trame d'observation et l'image à motifs sont disposées en différents emplacements d'un support de données de telle sorte que la trame d'observation et l'image à motifs puissent, pour une auto-authentification, être superposés, et à l'état superposé forment un élément de sécurité.

**16.** Papier de sécurité pour la fabrication de documents de sécurité ou de valeur, tels que des billets de banque, des chèques, des cartes d'identité, des certificats ou analogues, comportant un agencement de représentation selon au moins l'une des revendications 1 à 13.

**17.** Support de données, en particulier articles de marque, documents de valeur, articles décoratifs ou analogues, comportant un agencement de représentation selon au moins l'une des revendications 1 à 13.

**18.** Agencement électronique d'affichage, comportant un dispositif électronique d'affichage, en particulier un écran d'ordinateur ou de télévision, un dispositif de commande et un agencement de représentation selon au moins l'une des revendications 1 à 13, le dispositif de commande étant conçu et arrangé de façon à afficher l'image à motifs de l'agencement de représentation sur le dispositif électronique d'affichage.

10

12

16

10

14

## Fig. 1

22

20

26

24  28

## Fig. 2

EP 2 331 343 B1

Fig. 3

20

**Fig. 4a**

**Fig. 4b**

**Fig. 4c**

Fig. 5a

Fig. 5b

## Fig. 6a

## Fig. 6b

Fig. 6c

Fig. 7a

**Fig. 7b**

**Fig. 7c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0330733 A1
- EP 0064067 A1
- US 5712731 A
- DE 102006029850 A1
- WO 2007076952 A2
- WO 2005052650 A2
- DE 102005062132
- DE 102007029203
- EP 2006012374 W
- EP 2008005173 W
- EP 2008005172 W
- EP 2008005172 A

**In der Beschreibung aufgeführte Nicht-Patentliteratur**

- **M.C. HUTLEY ; R. HUNT ; R.F. STEVENS ; P. SA-VANDER.** The moire magnifier. *Pure Appl. Opt.,* 1994, vol. 3, 133-142